Europäisches Patentamt

European Patent Office

Office européen des brevets

(19)

(11) **EP 0 639 022 B1**

(12) # FASCICULE DE BREVET EUROPEEN

(45) Date de publication et mention
de la délivrance du brevet:
**28.10.1998 Bulletin 1998/44**

(51) Int Cl.⁶: **H04N 1/04**, H04N 1/32

(21) Numéro de dépôt: **94401790.4**

(22) Date de dépôt: **03.08.1994**

(54) **Appareil d'impression à vitesse d'impression réglable**

Druckgerät mit steuerbarer Druckgeschwindigkeit

Printing device with controllable printing speed

(84) Etats contractants désignés:
**BE DE GB IT**

(30) Priorité: **03.08.1993 FR 9309541**

(43) Date de publication de la demande:
**15.02.1995 Bulletin 1995/07**

(73) Titulaire: **SOCIETE D'APPLICATIONS GENERALES D'ELECTRICITE ET DE MECANIQUE SAGEM**
**F-75783 Paris Cédex 16 (FR)**

(72) Inventeur: **Frederic, Alain**
**F-95610 Eragny-sur-Oise (FR)**

(74) Mandataire: **Bloch, Gérard et al**
**2, square de l'Avenue du Bois**
**75116 Paris (FR)**

(56) Documents cités:
**US-A- 4 300 142**        **US-A- 4 521 813**
**US-A- 4 628 368**

- **PATENT ABSTRACTS OF JAPAN vol. 15, no. 502 (E-1147) 18 Décembre 1991 & JP-A-03 219 764 (MATSUSHITA GRAPHIC COMMUN SYST INC) 27 Septembre 1991**
- **PATENT ABSTRACTS OF JAPAN vol. 14, no. 144 (M-951) 19 Mars 1990 & JP-A-02 009 654 (MATSUSHITA GRAPHIC COMMUN SYST INC) 12 Janvier 1990**

# Description

La présente invention concerne un appareil d'impression comportant une tête d'impression.

Comme tête d'impression, on peut considérer les têtes thermiques, à jet d'encre, etc.

Comme appareil d'impression, on peut par exemple considérer un télécopieur. Celui-ci reçoit, d'un télécopieur distant, des données codées représentatives de lignes successives à imprimer. Lorsqu'une ligne comporte peu de suites de points noirs ou de points blancs, elle est codée par très peu de données, si bien que ces données sont transmises plus rapidement que dans le cas d'une ligne présentant un grand nombre de suites noires ou blanches. De ce fait, la vitesse de réception de la totalité des données d'une ligne est variable. Mais, cette vitesse est limitée par protocole échangé avec le télécopieur distant, la tête d'impression étant prédéterminée pour une vitesse maximale de réception des lignes.

La prédétermination de la vitesse maximale de la tête revient généralement à surdimensionner son alimentation.

La présente invention vise à s'affranchir de cet handicap.

A cet effet, l'invention concerne un appareil d'impression, comportant une tête d'impression, qui comporte une mémoire tampon et des moyens de calcul agencés pour déterminer, préalablement à l'impression de chaque ligne, le volume de mémoire tampon restant disponible, déterminer en conséquence une vitesse d'impression de la ligne considérée et commander en conséquence des moyens de réglage de la vitesse d'impression de la tête.

Grâce à l'invention, la vitesse d'impression peut ainsi être adaptée à la vitesse de réception des données et, en particulier, être accrue lorsque le volume de mémoire tampon restant disponible est inférieur à un seuil déterminé.

Le brevet US-A-4521813 divulgue par exemple un appareil où le taux de remplissage d'une mémoire tampon est considéré.

Pour cependant éviter au mieux l'occurence d'un passage à une vitesse d'impression accrue, susceptible d'entraîner une dégradation de la qualité d'impression, il est commode de prévoir des moyens de calcul agencés pour écrire dans la mémoire, sous la forme d'au moins un mot de code, les données représentatives d'une ligne.

L'occupation de la mémoire ne croît ainsi que faiblement en pareil cas.

De même, il peut être prévu que les moyens de calcul soient agencés pour déterminer la position de la ligne à imprimer dans la page et pour déterminer la vitesse d'impression correspondante en fonction de cette position.

Il est ainsi possible de mieux déterminer le risque de débordement et, par exemple en fin de page, de ne pas accroître la vitesse d'impression même si la mémoire est quasiment pleine, car il y aura un temps mort en réception, permettant de vider la mémoire.

Il est en particulier avantageux que les moyens de calcul soient agencés pour commander des moyens de saut de ligne de moyens d'entraînement du support d'impression.

L'invention sera mieux comprise à l'aide de la description suivante de la forme de réalisation préférée de l'appareil d'impression de l'invention, en référence au dessin annexé, sur lequel :

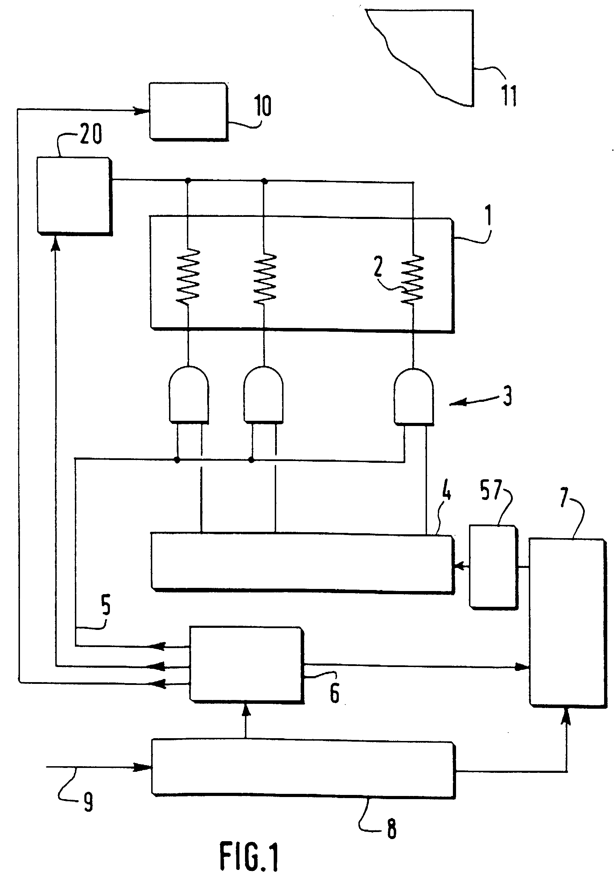

- la figure 1 est un schéma par blocs de l'appareil d'impression de l'invention,

- la figure 2 est un diagramme de cheminement relatif à l'impression des données reçues et

- la figure 3 illustre l'évolution du remplissage d'une mémoire contenant des lignes à imprimer.

L'appareil d'impression de l'invention est ici une imprimante thermique d'un télécopieur. Elle comporte une tête d'impression thermique 1 pourvue d'une pluralité d'éléments chauffants 2, organisés en blocs, alimentés à partir d'une source d'alimentation continue 20, ici réglable. Chaque élément chauffant 2 est commandé par une porte 3 à deux entrées, dont l'une est reliée en propre à une sortie d'un registre tampon d'impression 4 et dont l'autre est reliée à une liaison de commande 5 commune à toutes les portes 3, provenant d'un microprocesseur 6. Pour la clarté du schéma, il n'est représenté qu'un seul fil, alors qu'il en existe d'autres, pour alimenter séquentiellement les autres blocs d'éléments chauffants 2. Une mémoire tampon 7 est remplie par des données représentant des lignes successives à imprimer provenant d'un registre de réception 8 relié en entrée à une ligne téléphonique 9 transmettant ces données. Le microprocesseur 6 est aussi relié à la sortie du registre de réception 8 et à la mémoire 7.

Dans cet exemple, il est prévu un moteur pas à pas 10 contrôlé par le microprocesseur 6 et commandant un rouleau d'avance, non représenté, d'une feuille 11 de papier à imprimer. Le microprocesseur 6 commande aussi le réglage de la tension de la source d'alimentation 20.

Les données d'une ligne arrivent dans le registre de réception 8 à une vitesse moyenne Y. La tête 1 imprime, dans des conditions nominales, à une vitesse nominale $XO$ inférieure à la vitesse Y.

Le microprocesseur 6 est chargé de gérer le remplissage de la mémoire 7 et son vidage pour l'impression.

Pour contrôler l'écriture des données dans la mémoire 7, le microprocesseur 6 comporte un pointeur indiquant la position, ou adresse libre, en mémoire 7 qui suit la dernière position écrite. Dans le cas où le microprocesseur 6 reconnaît que les données reçues du registre de réception 8 représentent une ligne pouvant être imprimée rapidement, il interdit le transfert vers la mémoire 7 depuis le registre de réception 8 et écrit dans la mémoire 7 un ou plusieurs mots de code de compression, relativement courts, représentatifs de la ligne.

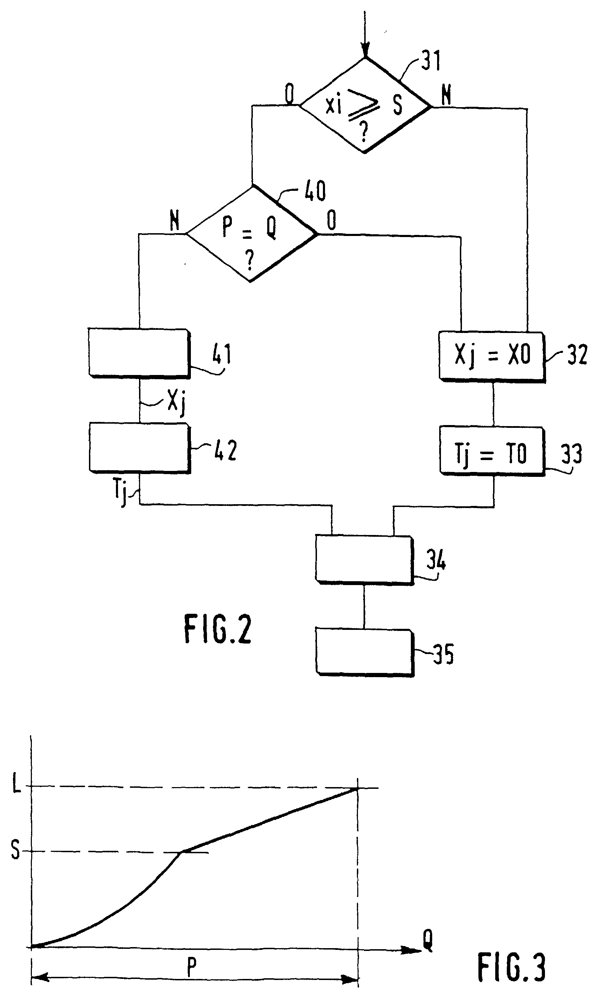

Les calculs effectués par le microprocesseur 6 pour la détermination de la vitesse d'impression instantanée Xj sont explicités sur la figure 2.

A une étape 31, le microprocesseur 6 compare à un seuil S l'adresse xi où doit être rangée en mémoire 7 les données de la ligne reçue. Si cette adresse xi est inférieure au seuil S, la vitesse d'impression instantanée Xj est fixée à une vitesse nominale XO à une étape 32, pour laquelle la durée de chauffage Tj est fixée à la valeur nominale TO à une étape 33. A une étape 36, la première ligne entrée dans la mémoire 7 est alors déchargée dans le registre d'impression 4 à partir de la mémoire 7 à travers un module de décompression 57 et sous la commande du microprocesseur 6. A une étape 35, un pointeur du microprocesseur 6 indiquant l'adresse de début de la zone mémoire occupée est mis à jour et l'impression de la ligne considérée intervient par envoi d'une commande activant les portes 3 par la liaison 5.

Pour la simplicité de l'exposé ci-dessus, on a considéré que la mémoire 7 fonctionnait en mémoire pile et que l'adresse du pointeur représentait le remplissage de la mémoire 7. On comprendra qu'en pratique la mémoire 7 comporte une zone d'adresses successives recevant les données. Cette zone se développe par un front avant situé du côté des adresses où les nouvelles données sont écrites et se restreint du côté où elle se vide pour l'impression. Cette zone se propage ainsi d'une adresse minimale vers une adresse maximale et, lorsque cette dernière est atteinte, poursuit sa progression par rebouclage de son front avant de remplissage sur l'adresse minimale, précédemment libérée. Le volume xi occupé par les données est donc en fait déterminé à partir de deux pointeurs indiquant chacun une des extrémités de cette zone occupée.

Si, à l'étape 31, l'adresse xi est supérieure ou égale au seuil S, le microprocesseur 6 examine, à une étape 40, si le nombre Q représentant le rang de la ligne considérée dans la page à imprimer, déterminé par comptage depuis la réception de données indiquant un début de page, est égal au nombre maximal P de lignes par page. En cas d'égalité, on repasse à l'étape 32. Sinon, à une étape 41, on calcule la vitesse d'impression instantanée Xj, ici d'après la formule :

$$\Delta Xj = Y . (P - Q) / (L - xi)$$

$\Delta Xj$ étant l'écart de la vitesse instantanée calculée Xj par rapport à la vitesse nominale XO, soit :

$$Xj = XO + \Delta Xj$$

et L : capacité de la mémoire 7

A une étape 42, la durée de chauffage Tj est calculée par la formule :

$$Tj = TO . XO / Xj$$

puis on repasse à l'étape 34.

Mais, et plus simplement, si à l'étape 31 l'adresse Xi est supérieure ou égale au seuil S, on peut commander la vitesse maximale d'impression, quitte à tolérer une dégradation de la qualité de l'impression.

La figure 3 illustre l'évolution du taux de remplissage de la mémoire 7 en fonction de la position des lignes dans une page de P lignes, la pente de la courbe indiquant la vitesse de remplissage.

## Revendications

1.  Appareil d'impression comportant une tête d'impression (1), qui comprend une mémoire (7) tampon, agencée pour être remplie, à une vitesse déterminée, par des données représentatives de lignes à imprimer sur un support d'impression (11) et pour être vidée ligne par ligne pour chaque impression de ligne par la tête, et des moyens de calcul (6), agencés pour déterminer, préalablement à l'impression de chaque ligne, le volume de mémoire tampon (7) restant disponible (L - xi), caractérisé en ce que les moyens de calcul (6) déterminent en conséquence une vitesse d'impression (Xj) de la ligne considérée et commandent en conséquence des moyens (3) de réglage de la vitesse d'impression (Xj) de la tête (1).

2.  Appareil d'impression selon la revendication 1, dans lequel les moyens de calcul (6) sont agencés pour écrire dans la mémoire (7), sous la forme d'au moins un mot de code, les données représentatives d'une ligne.

3.  Appareil d'impression selon l'une des revendications 1 et 2, dans lequel les données à imprimer sont les données d'une page et les moyens de calcul (6) sont agencés pour déterminer la position de la ligne à imprimer dans la page et pour déterminer la vitesse d'impression (Xj) correspondante en fonction de cette position.

4.  Appareil d'impression selon l'une des revendications 2 et 3, dans lequel les moyens de calcul (6) sont agencés pour commander des moyens de saut de ligne (10) de moyens d'entraînement du support d'impression (11).

5.  Appareil d'impression selon l'une des revendications 1 à 4, dans lequel la tête d'impression (1) est une tête thermique et les moyens de réglage de la vitesse d'impression comportent des moyens (6, 20) de réglage de l'activation de la tête (1).

## Patentansprüche

1. Druckvorrichtung mit einem Druckkopf (1), die einen Pufferspeicher (7) aufweist, der mit einer vorgegebenen Geschwindigkeit mit Daten gefüllt werden kann, die auf ein Druckträgermedium (11) zu druckende Zeilen darstellen, und der Zeile für Zeile für jeden Druck einer Zeile durch den Kopf geleert werden kann, und Rechenmittel (6), um vor dem Druck jeder Zeile das verbleibende verfügbare Volumen (L-xi) des Pufferspeichers (7) zu bestimmen, **dadurch gekennzeichnet,** daß die Rechenmittel (6) entsprechend eine Druckgeschwindigkeit ($X_j$) für die betrachtete Zeile bestimmen und entsprechend Mittel (3) zur Steuerung der Druckgeschwindigkeit ($X_j$) des Kopfes (1) ansteuern.

2. Druckvorrichtung nach Anspruch 1, wobei die Rechenmittel (6) die eine Zeile darstellenden Daten in Form wenigstens eines Codewortes in den Speicher (7) schreiben können.

3. Druckvorrichtung nach Anspruch 1 oder 2, wobei die zu druckenden Daten die Daten einer Seite sind und die Rechenmittel (6) die Position der zu druckenden Zeile innerhalb der Seite bestimmen können und die zugehörige Druckgeschwindigkeit ($X_j$) als Funktion dieser Position bestimmen können.

4. Druckvorrichtung nach Anspruch 2 oder 3, wobei die Rechenmittel (6) Zeilenvorschubmittel (10) von Antriebsmitteln des Druckträgermediums (11) ansteuern können.

5. Druckvorrichtung nach einem der Ansprüche 1 bis 4, wobei der Druckkopf (1) ein thermischer Kopf ist und wobei die Mittel zur Steuerung der Druckgeschwindigkeit Mittel (6,20) zur Steuerung der Aktivierung des Kopfes (1) aufweisen.

## Claims

1. Printing device comprising a print head (1) which comprises a buffer memory (7), arranged to be filled, at a specific rate, by data, representative of lines to be printed on a print medium (11), and to be emptied line by line each time a line is printed by the head, and calculating means (6) arranged to determine, prior to the printing of each line, the volume of buffer memory (7) remaining available (L - xi), characterised in that the calculating means (6) consequently determine a printing speed (Xj) for the line concerned and consequently control means (3) for controlling the printing speed (Xj) of the head (1).

2. Printing device according to claim 1, wherein the calculating means (6) are arranged to write to the memory (7), in the form of at least one code word, the data representative of a line.

3. Printing device according to one of claims 1 and 2, wherein the data to be printed are the data of a page and the calculating means (6) are arranged to determine the position of the line to be printed on the page and to determine the corresponding printing speed (Xj) depending on this position.

4. Printing device according to one of claims 2 and 3, wherein the calculating means (6) are arranged to control line feed means (10) of means for feeding the print medium (11).

5. Printing device according to one of claims 1 to 4, wherein the print head (1) is a thermal head and the means for controlling the printing speed comprise means (6, 20) for controlling the activation of the head (1).

FIG.1

FIG.2

FIG.3